# DEMANDE DE BREVET EUROPEEN

(11) **EP 0 967 837 A1**
(43) Date de publication de la demande: **29.12.1999**
(21) Numéro de dépôt: 99420140.8
(22) Date de dépôt: 21.06.1999
(51) Int. Cl.: H05B 3/72, A47J 36/02, H05B 3/82

(54) **Element chauffant pour applications alimentaires, et procédé pour sa fabrication**

(30) Priorité: 25.06.1998 FR 9808271
(71) Demandeur: THERMOCOMPACT, 74370 Metz Tessy (FR)
(72) Inventeur: Montaz, Jean-Pierre, 74600 Seyond (FR); Lansard, Jean-Luc, 74540 Alby sur Cheran (FR)
(74) Mandataire: Poncet, Jean-François

(57) **Abrégé**

Un élément chauffant (1) selon l'invention, pour applications alimentaires, comprend un corps (2) en acier inoxydable sollicité par une source de chaleur (3) et présentant une face de contact (5) destinée à être en contact avec des matières alimentaires (6). Le corps (2) comprend, au voisinage ou sur la face de contact (5), une surface de transition (7) réalisée par une étape de polissage électrolytique ou chimique. La surface de transition (7) est éventuellement recouverte d'une couche superficielle de finition (8) en or. La présence de la surface de transition (7) augmente très sensiblement les qualités alimentaires de l'élément chauffant (1), en prolongeant sa durée de vie.

## Description

La présente invention concerne les éléments chauffants destinés à venir en contact avec des produits alimentaires pour élever leur température.

Pour élever la température des produits alimentaires, les éléments chauffants sont souvent portés à des températures supérieures à 100°C. Il se produit le plus souvent des turbulences dans le produit alimentaire à chauffer, en particulier au voisinage de l'élément chauffant. Ainsi, la surface de l'élément chauffant est sollicitée thermiquement, mécaniquement et chimiquement dans des conditions plus sévères que les sollicitations subies par les autres surfaces de contact non chauffantes du récipient contenant les produits alimentaires.

Cette situation à sollicitations plus contraignantes se retrouve par exemple dans les résistances de chauffe des bouilloires, dans les plaques chauffantes de bouilloire, dans les fonds de casserole ou de poêle, dans les cafetières ou théières.

Par ailleurs, dans le traitement des produits alimentaires, il est nécessaire de réduire le plus possible l'émission d'ions, d'atomes ou d'autres particules provenant de l'élément chauffant et pénétrant dans le produit alimentaire. Les normes en vigueur précisent la quantité maximale d'émission d'ions, en deçà de laquelle un appareil de chauffage d'aliments présente des qualités alimentaires acceptables.

La présente invention résulte de l'observation selon laquelle les éléments chauffants sont responsables d'une perte progressive des qualités alimentaires des appareils de chauffage d'aliments.

La perte des qualités alimentaires se produit même lorsque l'on utilise, pour réaliser l'élément chauffant, des aciers inoxydables à hautes performances, et l'on constate une altération progressive de la surface de contact de l'élément chauffant.

Des essais ont été effectués pour prolonger la durée de vie des éléments chauffants pour produits alimentaires, par exemple en recouvrant la surface d'acier inoxydable avec une couche en or. Les résultats obtenus sont décevants, car l'augmentation de durée de vie n'est pas suffisante pour justifier le traitement supplémentaire et le coût additionnel qu'il implique.

On connaît également du document JP 08 182622 A une structure d'ustensile de cuisson dont la face de contact est formée d'une couche superficielle passive en oxyde de chrome recouvrant une couche intermédiaire obtenue par polissage électrolytique ou mécanique d'un acier inoxydable ferritique ou austénitique. La structure est légère et présente une bonne conductivité thermique. La couche passive en oxyde de chrome confère un pouvoir anti-adhérant facilitant l'enlèvement des aliments grillés.

Le problème proposé par la présente invention est d'augmenter sensiblement la durée de vie des éléments chauffants pour chauffage de produits alimentaires, en restant dans des limites raisonnables de coût de production de ces éléments.

Dans la description qui suit et dans les revendications, l'expression élément chauffant est destinée à désigner tous types d'éléments permettant d'échauffer les aliments, et notamment des éléments tels que des résistances chauffantes ou des plaques chauffantes incorporant une résistance électrique interne comme source de chaleur, ou des éléments tels que des casseroles ou des poêles dont les fonds sont sollicités thermiquement par une source extérieure de chaleur.

Les aliments peuvent comprendre tous types d'aliments liquides ou solides, et notamment l'eau.

Selon l'invention, la solution du problème est obtenue en prévoyant un élément chauffant pour applications alimentaires, comprenant un corps en acier inoxydable sollicité thermiquement par une source de chaleur et ayant une face de contact destinée à être en contact avec des matières alimentaires pour les chauffer ; le corps comprend, selon sa face de contact, une surface de transition présentant les caractères physico-chimiques d'une surface réalisée par polissage électrolytique et/ou chimique.

Selon un mode de réalisation avantageux, le corps est en un acier inoxydable contenant du chrome. Par l'effet du polissage électrolytique ou chimique, la surface de transition présente superficiellement une structure de composition plus pauvre en fer et plus riche en chrome que la masse du corps, avec absence d'écrouissage.

De préférence, l'acier inoxydable composant le corps contient une haute teneur en chrome, par exemple une proportion de chrome supérieure à 13 % en poids.

Selon une première possibilité, la surface de transition forme la face de contact du corps. Ainsi, la face de contact est en acier inoxydable.

En alternative, la surface de transition est recouverte d'au moins une mince couche superficielle de finition en or, ou en un métal de la famille du platine, ou en leurs alliages, constituant une structure poreuse qui n'altère pas les qualités de la surface de transition.

Selon un autre aspect, l'invention prévoit un procédé de fabrication d'un élément chauffant pour applications alimentaires, comprenant une étape de polissage électrolytique ou chimique pour réaliser une surface de transition.

On pourra avantageusement prévoir une étape de polissage électrolytique.

Selon une possibilité, l'étape de polissage électrolytique peut être précédée d'une étape préalable de polissage chimique.

Pour diverses raisons, on peut avantageusement prévoir en outre une étape ultérieure de dépôt d'une mince couche superficielle de finition, qui peut par exemple être en or, ou en un métal de la famille du platine, ou en leurs alliages.

Selon un autre aspect, l'invention prévoit un appareil de chauffage d'aliments tel que bouilloire, cafetière, théière, casserole, faitout ou poêle, incorporant un élément chauffant tel que défini ci-dessus.

D'autres objets, caractéristiques et avantages de la présente invention ressortiront de la description suivante de modes de réalisation particuliers, faite en relation avec les figures jointes, parmi lesquelles:
- la figure 1 illustre schématiquement, en coupe, une structure d'élément chauffant selon un premier mode de réalisation de la présente invention ; et
- la figure 2 illustre schématiquement, en coupe, une structure d'élément chauffant selon un second mode de réalisation de la présente invention.

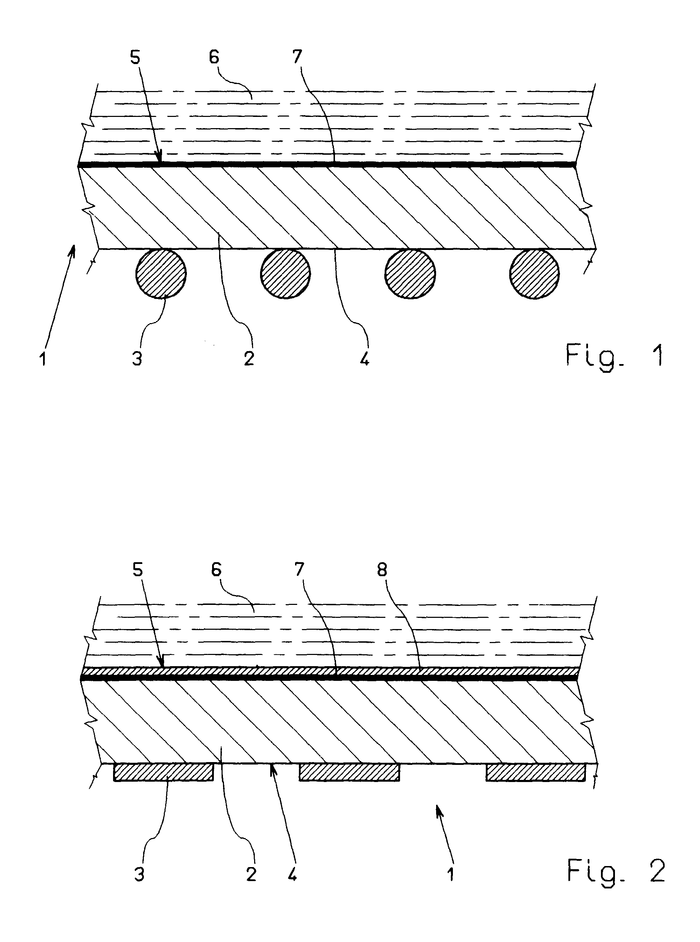

Dans le mode de réalisation de la figure 1, l'élément chauffant 1 comprend un corps 2 en acier inoxydable, sollicité thermiquement par une source de chaleur telle qu'une résistance électrique 3 en serpentin. La résistance électrique 3 est soudée ou brasée sur le corps 2 en acier inoxydable, selon la surface extérieure 4. Le corps 2 présente une face de contact 5, opposée à la surface extérieure 4, et destinée à être en contact avec des matières alimentaires 6 pour les chauffer.

Le corps 2 comprend, selon sa face de contact 5, une surface de transition 7 présentant les caractères physico-chimiques d'une surface réalisée par polissage électrolytique ou chimique.

Une opération de polissage électrolytique ou chimique, réalisée sur la face de contact 5 d'un corps 2 en acier inoxydable à haute tenue en température, modifie la teneur en chrome dans la surface de transition 7.

Par exemple, en utilisant un corps 2 en acier inoxydable à haute teneur en chrome, avantageusement ayant une proportion de chrome supérieure à 13 % en poids, la surface de transition 7 présente superficiellement une structure de composition plus pauvre en fer et plus riche en chrome que la masse du corps 2, et dépourvue d'écrouissage.

Les essais réalisés par l'inventeur montrent que la présence d'une telle surface de transition 7 augmente très sensiblement la durée de vie de l'élément chauffant, en pérennisant ses qualités alimentaires.

Dans le mode de réalisation de la figure 1, la surface de transition 7 forme la face de contact 5 du corps 2, au contact des matières alimentaires 6.

Dans le second mode de réalisation illustré sur la figure 2, on retrouve le corps 2 en acier inoxydable présentant une surface extérieure 4 et une surface de transition 7 ayant les caractères physico-chimiques d'une surface réalisée par polissage électrolytique ou chimique. La source de chaleur est une résistance électrique 3 sérigraphiée sur la surface extérieure 4 du corps 2. Pour des raisons d'accrochage notamment, on peut trouver intérêt, dans ce cas, à utiliser un corps 2 en acier inoxydable ferritique. Il est alors nécessaire, avant d'exécuter une opération de polissage électrolytique ou chimique pour réaliser la surface de transition 7, de procéder à une opération préalable de décapage-décalaminage.

Dans le mode de réalisation de la figure 2, on a en outre représenté un corps 2 dont la surface de transition 7 est recouverte d'une mince couche superficielle de finition 8, pouvant être en or, ou en un métal de la famille du platine, ou en leurs alliages, par exemple. La couche superficielle de finition 8 peut avantageusement avoir une épaisseur inférieure à 0,5 microns. Une telle couche superficielle mince de finition 8 constitue une structure poreuse, modifiant l'aspect de la surface mais n'altérant pas les qualités de la surface de transition 7 et les avantages qui en résultent.

On peut également prévoir une telle couche superficielle de finition 8 sur la surface de transition 7 du corps 2 selon le mode de réalisation de la figure 1.

Les essais qui ont été effectués montrent une amélioration très sensible et durable des qualités alimentaires d'un élément chauffant 1, au cours de la durée de son utilisation, lorsqu'il comporte une surface de transition 7.

Par exemple, pour un élément chauffant 1 comportant une couche superficielle de finition 8 en or, des essais comparatifs ont été effectués d'une part en prévoyant une surface de transition 7, et d'autre part en l'absence de surface de transition 7. Les éléments chauffants des deux types ont été soumis à des cycles de mise en ébullition d'eau, de vidage, de remplissage et de mise en ébullition d'eau, en détartrant la face de contact 5 périodiquement, par exemple tous les 400 cycles. La couche superficielle de finition 8 en or avait une épaisseur d'environ 0,2 microns. Dans les deux cas, le corps 2 avait la même composition, à savoir un acier inoxydable de type 316 L, ayant environ 18 % de chrome et 10 % de nickel, adapté pour une tenue en température.

L'élément chauffant dépourvu de surface de transition 7 a présenté des défauts d'aspect et de qualités alimentaires après 1 200 cycles. Par contre, l'élément chauffant muni de la surface de transition 7 a tenu plus de 9 000 cycles avant de présenter un défaut d'aspect et de qualités alimentaires.

Pour la fabrication d'un élément chauffant tel que décrit précédemment, on utilise une étape de polissage électrolytique ou chimique pour réaliser la surface de transition 7.

L'étape de polissage électrolytique peut être réalisée de façon connue, par exemple comme décrit dans le brevet US-A-2,334,698, par électrolyse dans un bain d'acide phosphorique et d'acide sulfurique.

Une étape préalable de polissage chimique peut avantageusement être utilisée. Elle permet de réduire la durée de l'étape de polissage électrolytique.

La présente invention n'est pas limitée aux modes de réalisation qui ont été explicitement décrits, mais elle en inclut les diverses variantes et généralisations contenues dans le domaine des revendications ci-après.

## Revendications

1. Elément chauffant (1) pour applications alimentaires, comprenant un corps (2) en acier inoxydable sollicité thermiquement par une source de chaleur (3) et ayant une face de contact (5) destinée à être en contact avec des matières alimentaires (6) pour les chauffer, caractérisé en ce que le corps (2) comprend, selon sa face de contact (5), une surface de transition (7) présentant les caractères physico-chimiques d'une couche réalisée par polissage électrolytique et/ou chimique.

2. Elément chauffant selon la revendication 1, caractérisé en ce que le corps (2) est en acier inoxydable contenant du chrome, et la surface de transition (7) présente superficiellement une structure non écrouie de composition plus pauvre en fer et plus riche en chrome que la masse du corps (2).

3. Elément chauffant selon la revendication 2, caractérisé en ce que l'acier inoxydable composant le corps (2) contient une proportion de chrome supérieure à 13 % en poids.

4. Elément chauffant selon l'une quelconque des revendications 1 à 3, caractérisé en ce que la surface de transition (7) forme la face de contact (5) du corps (2).

5. Elément chauffant selon l'une quelconque des revendications 1 à 3, caractérisé en ce que la surface de transition (7) est recouverte d'au moins une mince couche superficielle de finition (8) en or, ou en un métal de la famille du platine, ou en leurs alliages.

6. Appareil de chauffage d'aliments tel que bouilloire, cafetière, théière, casserole, faitout ou poêle, caractérisé en ce qu'il comprend un élément chauffant (1) selon l'une quelconque des revendications 1 à 5.

7. Procédé de fabrication d'un élément chauffant (1) pour applications alimentaires selon l'une quelconque des revendications 1 à 5, caractérisé en ce qu'il comprend une étape de polissage électrolytique ou chimique pour réaliser une surface de transition (7).

8. Procédé selon la revendication 7, caractérisé en ce qu'il comprend une étape de polissage électrolytique précédée d'une étape préalable de polissage chimique.

9. Procédé selon l'une des revendications 7 ou 8, caractérisé en ce qu'il comprend une étape ultérieure de dépôt d'une mince couche superficielle de finition (8).

10. Procédé selon la revendication 9, caractérisé en ce que la couche superficielle de finition (8) est en or, ou en un métal de la famille du platine, ou en leurs alliages.
